# EUROPEAN PATENT SPECIFICATION

(11) **EP 0 922 189 B1**
(45) Date of publication and mention of the grant of the patent: **19.12.2001**
(21) Application number: 97936946.9
(22) Date of filing: 14.08.1997
(51) Int. Cl.: F28D 19/04

(54) **Rotary regenerative preheater**
Regenerativwärmeaustauscher
Echangeur à chaleur à régénération

(30) Priority: 27.08.1996 US 703512
(43) Date of publication of application: 16.06.1999
(73) Proprietor: ALSTOM POWER INC., Windsor, Connecticut 06095 (US)
(72) Inventor: BROPHY, Mark, Eugene, Wellsville, NY 14895 (US)
(74) Representative: Dreiss, Fuhlendorf, Steimle & Becker
(86) International application number: PCT/US97/11547
(87) International publication number: WO 98/09126

(56) References cited:
- DE-A- 2 153 486
- FR-A- 2 377 599
- US-A- 4 984 621
- US-A- 5 119 885

## Description

### Background of the Invention

The present invention relates to a rotary regenerative preheater basket assembly comprising the features of the preamble of claim 1.

Such a rotary regenerative heat exchanger is employed to transfer heat from one hot gas stream, such as a flue gas stream, to another cold gas stream, such as combustion air. The rotor contains a mass of heat absorbent material which is first positioned in a passageway for the hot gas stream where heat is absorbed by the heat absorbent material. As the rotor turns, the heated absorbent material enters the passageway for the cold gas stream where the heat is transferred from the absorbent material to the cold gas stream.

In a typical rotary heat exchanger, such as a rotary regenerative air preheater, the cylindrical rotor is disposed on a central rotor post and divided into a plurality of sector-shaped compartments by a plurality of radial partitions, known as diaphragms, extending from the rotor post to the outer peripheral shell of the rotor. These sector shaped compartments are loaded with modular heat exchange baskets which contain the mass of heat absorbent material commonly comprised of stacked plate-like elements.

The conventional heat exchange basket comprises a frame which is open on each end and which has side walls which may have covers. The baskets are subject to radial deformation between the hot and the cold faces of the basket and along the chord width of the outboard basket cover. This deformation is caused by the element packing pressure. Such deformation can become a problem when tight dimensional tolerances are required for basket installation into the compartments. In addition, such deformation may cause interference between adjacent baskets or with the rotor structure. Where such deformation is unacceptable, conventional baskets utilize frame components and covers have been fabricated from heavier gauge materials to resist the force exerted by the heat exchange elements. Such basket structure adds excess weight to the rotor and compromises heat transfer surface area.

Other heat exchange basket arrangements have been proposed. For example, US-A-4 984 621 discloses a plurality of heat transfer element plates 32 juxtaposed in a stacked array so as to form a plurality of flow passages therethrough and a basket frame surrounding the stacked array of heat transfer element plates to support the element plates. An end closure member 36 is interconnected at its lower end between the end portions of the outwardly extending legs 444 of a lower shell member 44 of the basket frame and at its upper end between the end portions of the outwardly extending legs 344 of an upper shell member 34 of the basket frame.

As another example of prior art heat exchange basket arrangements, DE-A-21 53 486 discloses a rotor of a rotary regenerative air preheater having a central portion 10 and a rotor shell 12. A plurality of partition walls 14 extend radially from the central portion 10 to the rotor shell 12 and form compartments therebetween in which heat transferring elements are disposed. A plurality of segment walls 18 each extend between an adjacent pair of partition walls 14 and each segment wall 18 is provided with a pair of axially extending slots 22 radially offset from one another. The slots 22 permit the segment walls 18 to flexibly yield--namely, expand or contract--in the circumferential direction to thereby help reduce the tension imposed on the partition walls 14 and the segment walls 18 due to thermal expansion and contraction effects.

One known configuration of a prior art element basket housing comprises a frame formed of a pair of spaced plate-like end members held together by paired side straps interconnecting the end members along the sides thereof such as shown in U.S. Pat. Nos. 3,314,472; 4,561,492 and 4,606,400. A plurality of heat transfer plates are stacked in closely spaced relationship within the basket housing to provide a plurality of passageways between adjacent plates through which the heat exchange fluids pass. The side straps which interconnect the spaced end members typically extend in pairs along the opposite sides of the stacked array of heat exchange elements. On each side of the heat exchange element is a first side strap extending between the upper regions of the spaced end members and a second side strap extending between the lower region of the end members in spaced, parallel relationship to the first side strap. The side straps may be flanged inwardly along the longitudinal edge lying at the edge of the basket assembly to provide a retaining surface for preventing the heat transfer plates from falling out of the open ends of the element basket as shown in U.S. Pat. No. 3,314,472.

Element baskets have also been constructed in the past with a box-like housing as shown in U.S. Pat. No. 3,379,240. As depicted therein, the element basket is formed of a solid sheet folded into a generally U-shaped member having a base end and two outwardly extending, diverging legs. A solid accurate end plate is welded between the outward end portions of the legs of the U-shaped member after the heat exchange element sheets have been stacked within the housing defined by the U-shaped member. A resilient curved pressure member is disposed between the stacked element sheets and the base end of the U-shaped member to ensure that a compressive force is imposed against the stacked element to keep the element sheets in a tightly packed array against the end plate welded between the legs of the U-shaped member.

### Summary of the Invention

It is the object of the invention to provide novel means for limiting the deformation of the cover for the heat exchange basket. In accordance with the invention, this object is solved by the features of claim 1. The shrinkage caused by the weld pattern between the cover and the membrane causes the membrane to be pre-stressed in tension. The pre-stressed membrane resists deformation of the basket cover assembly.

### Brief Description of the Drawings

Figure 1 is a general perspective view of a rotary regenerative air preheater.
Figure 2 is a top plan view of a portion of the rotor of a preheater illustrating one level of baskets in position between diaphragms.
Figure 3 is a top plan view of a heat exchanged basket according to the prior art, showing the deformation of the cover due to packing pressure.
Figure 4 is a side view of the heat exchange basket of Figure 3.
Figure 5 is a section view of a basket cover assembly in accordance with the invention.
Figure 6 is a view taken along line 6-6 of Figure 5, partly in phantom, of the basket cover assembly.

### Description of the Preferred Embodiment

It is known to provide, for a rotary regenerative air preheater basket assembly, a basket means having a plurality of open sides and configured to contain therewithin a heat exchange means which provides heat exchange surface area and a heat storage means. Such a known basket means also includes a cover means for covering one of its open sides. The present invention, as now described more fully and as claimed in claim 1, provides an improvement to this known basket means.

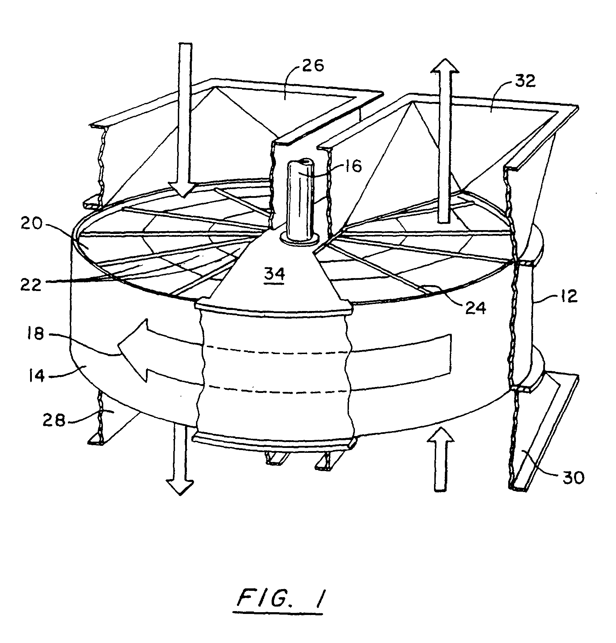

Figure 1 of the drawings is a partially cut-away perspective view of a typical air heater showing a housing 12 in which the rotor 14 is mounted on drive shaft or post 16 for rotation as indicated by the arrow 18. The rotor is composed of a plurality of sectors 20 with each sector containing a number of basket modules 22 and with each sector being defined by the diaphragms 24. The basket modules 22 contain the heat exchange surface. The housing 12 is divided by means of the flow impervious sector plate 34 into a flue gas side and an air side. A corresponding sector plate is also located on the bottom of the unit. The hot flue gases enter the air heater through the gas inlet duct 26, flow through the rotor 14 where heat is transferred to the rotor 14 and then exit through gas outlet duct 28. The countercurrent flowing air enters through air inlet duct 30, flows through the rotor 14 where it picks up heat and then exits through air outlet duct 32.

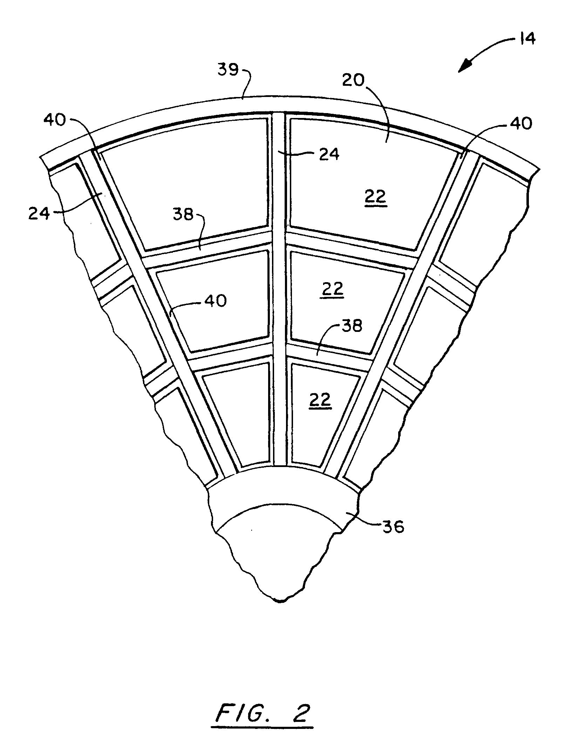

Referring now to Figure 2 which shows a plan view of a portion of a rotor 14, the diaphragms 24 are shown extending radially between the central portion 36 of the rotor and the rotor shell 39. Extending between the diaphragms 24 can be the stay plates 38 which are welded to the diaphragms 24. These stay plates 38 divide each sector 20 into a plurality of radially adjacent basket compartments 40. The basket modules 22 can be loaded into the rotor axially down into each compartment and sitting on top of each other. Such basket modules 22 may also be loaded radially.

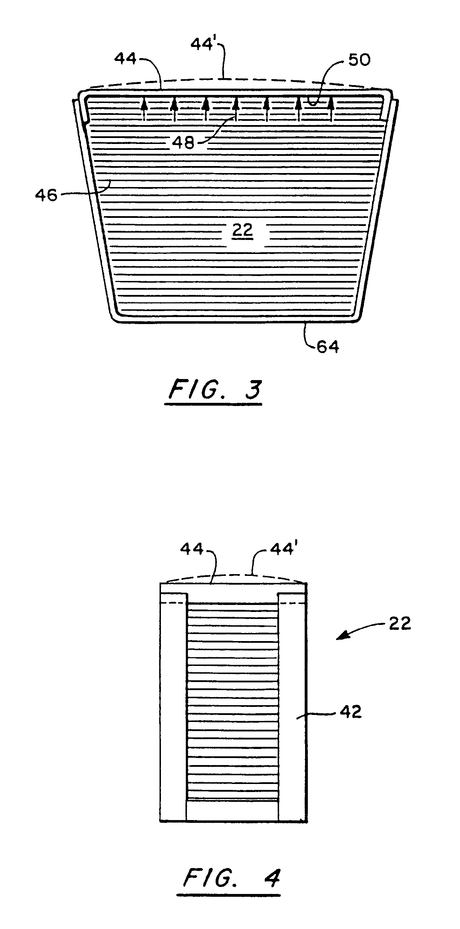

With reference to Figures 3 and 4, prior art heat exchange baskets 22 generally comprise a frame 42 which is open on each end. Covers 44 are mounted to the sides of the frame 42. Element packing pressure illustrated by tie arrows 48, exerted by the heat exchange elements 46 contained within the basket 22, acts on the inside surface 50 of the cover, especially on the outboard basket cover 44, causing the covers to bow outward to a position illustrated by the dotted lines 44'. Such deformation can become a problem when tight dimensional tolerances are required for basket installation into the compartments 40. In addition, such deformation may cause interference between adjacent baskets or with the rotor structure.

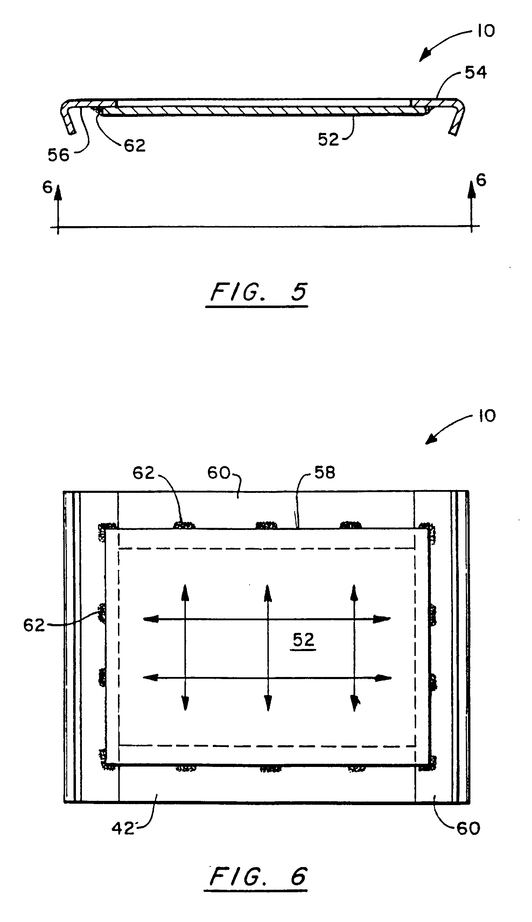

As shown in Figures 5 and 6, a basket cover assembly 10 in accordance with the invention comprises a light gauge membrane 52 which is welded to the interior surface 56 of the basket cover 54 along the perimeter 58 of the membrane 52. Preferably, the membrane 52 is composed of the same material as the cover 54 and is centered on the surface 56 of the cover 54. Generally, the outside dimensions of the membrane 52 are smaller than the corresponding outside dimensions of the cover 54 such that a portion 60 of the cover 54 extends beyond the membrane 52 on all sides. A continuous weld or a skip weld 62 may be used to mount the membrane 52 to the cover 54, however a skip weld 62 is less expensive than a continuous weld. The number and location of the welds 62 are selected such that the perimeter 58 of the membrane 52 remains firmly mounted to the cover 54 under the tension load described below and under the maximum force that may be exerted by the heat exchange elements 46.

The welds 62 cause shrinkage of the membrane 52. Since movement of the membrane edges is constrained by the weld 62, such shrinkage places the membrane 52 under tensile stress. When mounted to the basket frame 42, the pre-stressed membrane 52 resists the force exerted by the heat exchange elements 46. Consequently, a cover assembly 10 in accordance with the subject invention does not deform in the manner of conventional covers 44.

Although the membrane 52 contributes additional weight to the basket, such additional weight is much less than the weight attributable to manufacturing the frame components and the cover from heavier gauge materials. Consequently, the total weight of the basket is less than that of conventional baskets which are constructed of heavier material to resist deformation.

It should be appreciated that pre-stressed cover assemblies 10 may be utilized on any side surface which is subject to deformation. For example, a cover assembly 10 in accordance with the invention may be utilized at the inboard end 64 (Figure 3) of the basket of large rotors wherein the width of the inboard end 64 has become large enough that a cover installed on the inboard end 64 would be subject to deformation. It should be further appreciated that cover assemblies 10 in accordance with the invention also function to close parts of the basket frame 42 which had previously been left open, thereby preventing protrusion of heat exchange elements 46 through such basket frames 42 due to the deformation.

While preferred embodiments have been shown and described, various modifications and substitutions may be made thereto without departing from the scope of the invention. Accordingly, it is to be understood that the present invention has been described by way of illustration and not limitation.

## Claims

1. A rotary regenerative air preheater basket assembly (10) including basket means (22) having a plurality of open sides, heat exchange means (46) contained within said basket means (22) for providing a heat exchange surface area and a heat storage mass, and cover means (54) for covering one of said open sides of said basket means (22) **characterized in that** said cover means (54) includes a metallic member having an inside surface (56), a metallic membrane (52) defining a perimeter (58), and weld means (62) for mounting said perimeter (58) of said metallic membrane (52) to said inside surface (56) of said metallic member, wherein said weld means (62) prevents movement of said perimeter (58) relative to said cover means (54) and said weld means (62) imposes a tensile stress on said metallic membrane (52).

2. The rotary regenerative air preheater basket assemble as set forth in Claim 1 further **characterized in that** said cover means (54) and said metallic membrane (52) are composed of the same material.

3. The rotary regenerative air preheater basket assembly as set forth in Claim 1 further **characterized in that** said weld means (62) comprises a plurality of spot-welds

4. The rotary regenerative air preheater basket assembly as set forth in Claim 1 further **characterized in that** said weld means (62) comprises a continuous weld.

5. The rotary regenerative air preheater basket assembly as set forth in Claim 1 further **characterized in that** said cover means (54) extends beyond said perimeter (58) of said metalic membrane (52).

## Patentansprüche

1. Korbanordnung (10) für einen regenerativen Drehluftvorwärmer mit mehrere offene Seiten aufweisenden Korbmitteln (22), in den Korbmitteln (22) enthaltenen Wärmeaustauschmitteln (46) zur Bereitstellung einer Wärmeaustauschoberfläche und einer Wärmespeichermasse und einem Abdeckungsmittel (54) zur Abdeckung einer der offenen Seiten der Korbmittel (22), **dadurch gekennzeichnet, daß** das Abdeckungsmittel (54) ein metallisches Glied enthält, das eine Innenfläche (56), eine einen Umfang (58) definierende metallische Membran (52) und ein Schweißmittel (62) zur Befestigung des Umfangs (58) der metallischen Membran (52) an der Innenfläche (56) des metallischen Glieds aufweist, wobei das Schweißmittel (62) eine Bewegung des Umfangs (58) bezüglich des Abdeckungsmittels (54) verhindert und auf die metallische Membran (52) eine Zugspannung ausübt.

2. Korbanordnung für einen regenerativen Drehluftvorwärmer nach Anspruch 1, weiterhin **dadurch gekennzeichnet, daß** das Abdeckungsmittel (54) und die metallische Membran (52) aus dem gleichen Material bestehen.

3. Korbanordnung für einen regenerativen Drehluftvorwärmer nach Anspruch 1, weiterhin **dadurch gekennzeichnet, daß** das Schweißmittel (62) mehrere Punktschweißungen umfaßt.

4. Korbanordnung für einen regenerativen Drehluftvorwärmer nach Anspruch 1, weiterhin **dadurch gekennzeichnet, daß** das Schweißmittel (62) eine durchlaufende Schweißung umfaßt.

5. Korbanordnung für einen regenerativen Drehluftvorwärmer nach Anspruch 1, weiterhin **dadurch gekennzeichnet, daß** sich das Abdeckungsmittel (54) über den Umfang (58) der metallischen Membran (52) hinaus erstreckt.

## Revendications

1. Ensemble (10) de panier pour réchauffeur d'air rotatif à récupération, comprenant un moyen de panier (22) présentant une pluralité de côtés ouverts, des moyens d'échange de chaleur (46) contenus dans lesdits moyens de panier (22) pour fournir une superficie d'échange de chaleur et une masse de stockage de chaleur, et des moyens de couvercle (54) pour couvrir l'un desdits côtés ouverts desdits moyens de panier (22), **caractérisé en ce que** ledit moyen de couvercle (54) comprend un organe métallique présentant une surface intérieure (56), une membrane métallique (52) définissant un périmètre (58) et des moyens de soudure (62) pour monter ledit périmètre (58) de ladite membrane métallique (52) sur ladite surface intérieure (56) dudit organe métallique, lesdits moyens de soudure (62) empêchant le déplacement dudit périmètre (58) par rapport audit moyen de couvercle (54) et lesdits moyens de soudure (62) exerçant une contrainte de tension sur ladite membrane métallique (52).

2. Ensemble de panier de réchauffeur d'air rotatif à récupération selon la revendication 1, **caractérisé en outre en ce que** ledit moyen de couvercle (54) et ladite membrane métallique (52) sont constitués du même matériau.

3. Ensemble de panier de réchauffeur d'air rotatif à récupération selon la revendication 1, **caractérisé en outre en ce que** ledit moyen de soudure (62) comprend une pluralité de points de soudure.

4. Ensemble de panier de réchauffeur d'air rotatif à récupération selon la revendication 1, **caractérisé en outre en ce que** ledit moyen de soudure (62) comprend une soudure continue.

5. Ensemble de panier de réchauffeur d'air rotatif à récupération selon la revendication 1, **caractérisé en outre en ce que** ledit moyen de couvercle (54) s'étend au-delà dudit périmètre (58) de ladite membrane métallique (52).
